# EUROPEAN PATENT APPLICATION

(11) **EP 4 822 952 A1**
(43) Date of publication of application: **14.10.2026**
(21) Application number: 24900654.5
(22) Date of filing: 04.12.2024
(51) Int. Cl.: H02K 1/278, H02K 15/035

(54) **ROTOR AND ROTOR MANUFACTURING METHOD**

(30) Priority: 08.12.2023 JP 2023207899
(71) Applicant: DENSO CORPORATION, Kariya-city, Aichi 448-8661 (JP)
(72) Inventor: MATSUMOTO Kuniaki, Kariya-city, Aichi 448-8661 (JP); IMAYASU Shinya, Kariya-city, Aichi 448-8661 (JP); OZAKI Kengo, Kariya-city, Aichi 448-8661 (JP)
(74) Representative: Kuhnen & Wacker Patent- und Rechtsanwaltsbüro PartG mbB
(86) International application number: PCT/JP2024/042908
(87) International publication number: WO 2025/121360

(57) **Abstract**

A rotor (10) includes an annular magnet portion (22) including multiple permanent magnets (31) arranged in a circumferential direction to have an annular shape, a scattering prevention member (23) made of a fiber-reinforced resin material in which a fiber bundle (52) is hardened with a resin base material (53), and covering an entire circumference of an outer peripheral surface (22a) of the annular magnet portion, and a magnet holding portion (24) including a pair of flange portions (26, 27) extending outward in a radial direction of the annular magnet portion and disposed on both sides of the annular magnet portion in an axial direction of the annular magnet portion. The pair of flange portions hold the both sides of the annular magnet portion. Each of the pair of flange portions includes a flange outer peripheral surface (26a, 27a) having a circular shape when viewed in an axial direction. The outer peripheral surface of the annular magnet portion has a circular shape when viewed in the axial direction. The scattering prevention member includes a magnet covering portion (40) covering the outer peripheral surface of the annular magnet portion, and a pair of flange covering portions (41, 42) respectively, covering the flange outer peripheral surfaces of the pair of flange portions. At least one of the pair of flange portions is a small-diameter flange portion (26, 27) that has the flange outer peripheral surface with a radius (D1, D2) smaller than a radius (D3) of the outer peripheral surface of the annular magnet portion.

## Description

### CROSS REFERENCE TO RELATED APPLICATION

This application is based on Japanese Patent Application No. 2023-207899 filed on December 8, 2023, the contents of which are incorporated herein by reference.

### TECHNICAL FIELD

The present disclosure relates to a rotor in a motor and a method for manufacturing the rotor.

### BACKGROUND ART

For example, the rotor described in Patent Literature 1 includes an annular magnet portion formed by arranging multiple permanent magnets in an annular shape along a circumferential direction, and a scattering prevention member covering an outer peripheral surface of the annular magnet portion over the entire circumference. The rotor also has a pair of flange portions holding both axial sides of the annular magnet portion, respectively. The scattering prevention member is formed of a fiber-reinforced resin material obtained by hardening a fiber bundle with a resin base material. In molding the scattering prevention member, first, a sheet material in which the fiber bundle is impregnated with the resin base material is spirally wound around the outer periphery of the annular magnet portion. Thereafter, by heating the sheet material, the sheet material is melted and cured. Thus, the cylindrical scattering prevention member is formed on the outer periphery of the annular magnet portion.

In the rotor as described above, in order to prevent respective permanent magnets forming the annular magnet portion from falling off in a centrifugal direction, a large holding force in the scattering prevention member is required. For this reason, when winding the sheet material forming the scattering prevention member, the sheet material is wound while applying a large tension in a longitudinal direction of the sheet material. At this time, regarding a start of winding of the sheet material, the sheet material is wound one turn or multiple turns on a flange outer peripheral surface of the flange portion along a plane perpendicular to an axis of the rotor. Then, at a stage where it becomes possible to apply a desired tension to the sheet material, the sheet material is spirally wound on the outer peripheral surface of the annular magnet portion. Thus, it becomes possible to exert a large holding force of the scattering prevention member over the entire axial length of the annular magnet portion.

### PRIOR PATENT LITERATURE

### PATENT LITERATURE

Patent Literature 1: JP 7064850 B2

### SUMMARY OF THE INVENTION

The scattering prevention member molded as described above includes an axial end portion of the scattering prevention member corresponding to a winding start portion of the sheet material. The axial end portion may protrude radially outward more than other portions of the scattering prevention member. For this reason, in order to prevent interference between a protruding portion of the axial end portion of the scattering prevention member and a stator, it may become necessary to secure a large distance between the scattering prevention member and the stator, and as a result, there is a possibility that motor performance degrades.

An object of the present disclosure is to provide a rotor and a method for manufacturing the rotor capable of reducing protrusion radially outward in a scattering prevention member. In a first aspect of the present disclosure, a rotor includes an annular magnet portion, a scattering prevention member, and a magnet holding portion. The annular magnet portion includes multiple permanent magnets arranged in a circumferential direction to have an annular shape. The scattering prevention member is made of a fiber-reinforced resin material in which a fiber bundle is hardened with a resin base material and covers an entire circumference of an outer peripheral surface of the annular magnet portion. The magnet holding portion includes a pair of flange portions extending outward in a radial direction of the annular magnet portion. The pair of flange portions are disposed on both sides of the annular magnet portion in the axial direction of the annular magnet portion. The pair of flange portions holds the both sides of the annular magnet portion. Each of the pair of flange portions includes a flange outer peripheral surface having a circular shape when viewed in the axial direction. The outer peripheral surface of the annular magnet portion has a circular shape when viewed from the axial direction. The scattering prevention member includes a magnet covering portion covering the outer peripheral surface of the annular magnet portion and a pair of flange covering portions, respectively, covering the flange outer peripheral surfaces of the pair of flange portions. At least one of the pair of flange portions is a small-diameter flange portion that has a radius of the flange outer peripheral surface smaller than a radius of the outer peripheral surface of the annular magnet portion.

According to this configuration, it becomes possible to wind the sheet material while applying an appropriate tension and reducing protrusion radially outward of the winding start portion by starting winding the sheet material forming the scattering prevention member from the small-diameter flange portion having an outer radius smaller than that of the annular magnet portion. Thus, it becomes possible to prevent a position of the scattering prevention member corresponding to the winding start portion of the sheet material from protruding radially outward. Thus, it becomes possible to reduce a distance between the scattering prevention member and a stator, and as a result, motor performance can be improved.

In a second aspect of the present disclosure, a rotor includes an annular magnet portion, a scattering prevention member, and a magnet holding portion. The annular magnet portion includes multiple permanent magnets arranged in a circumferential direction to have an annular shape. The scattering prevention member is made of a fiber-reinforced resin material in which a fiber bundle is hardened with a resin base material. The scattering prevention member covers an entire circumference of an outer peripheral surface of the annular magnet portion. The magnet holding portion includes a pair of flange portions extending outward in a radial direction of the annular magnet portion. The pair of flange portions are disposed on both sides of the annular magnet portion in an axial direction of the annular magnet portion. The pair of flange portions hold the both sides of the annular magnet portion. Each of the pair of flange portions includes a flange outer peripheral surface having a circular shape when viewed in the axial direction. The outer peripheral surface of the annular magnet portion has a circular shape when viewed in the axial direction. At least one of the pair of flange portions is a small-diameter flange portion that has a radius of the flange outer peripheral surface smaller than a radius of the outer peripheral surface of the annular magnet portion. A method for manufacturing the rotor includes forming a temporary winding portion and forming a main winding portion. The forming of the temporary winding portion is performed by winding a sheet material of the scattering prevention member along an imaginary plane perpendicular to an axis of the rotor on a flange outer peripheral surface of the small-diameter flange portion at a start of winding of the sheet material. After the forming of the temporary winding portion, the forming of the main winding portion is performed by spirally winding the sheet material on the outer peripheral surface of the annular magnet portion.

According to this manufacturing method, it becomes possible to wind the sheet material while applying an appropriate tension and reducing protrusion radially outward of the winding start portion by starting winding the sheet material forming the scattering prevention member from the small-diameter flange portion having an outer radius smaller than that of the annular magnet portion. Thus, it becomes possible to prevent a position of the scattering prevention member corresponding to the winding start portion of the sheet material from protruding radially outward. Thus, it becomes possible to reduce a distance between the scattering prevention member and a stator, and as a result, motor performance can be improved.

### BRIEF DESCRIPTION OF DRAWINGS

The above object and other objects, features, and advantages of the present disclosure will become more apparent from the following detailed description with reference to the accompanying drawings. The drawings are:
FIG. 1 is a perspective view of a rotor in an embodiment;
FIG. 2 is a perspective view showing a manufacturing process of the rotor in the embodiment;
FIG. 3 is a cross-sectional view of the rotor in the embodiment; and
FIG. 4 is a cross-sectional view showing the manufacturing process of the rotor in the embodiment.

### DETAILED DESCRIPTIONS

Hereinafter, an embodiment of a rotor and a method for manufacturing the rotor will be described.

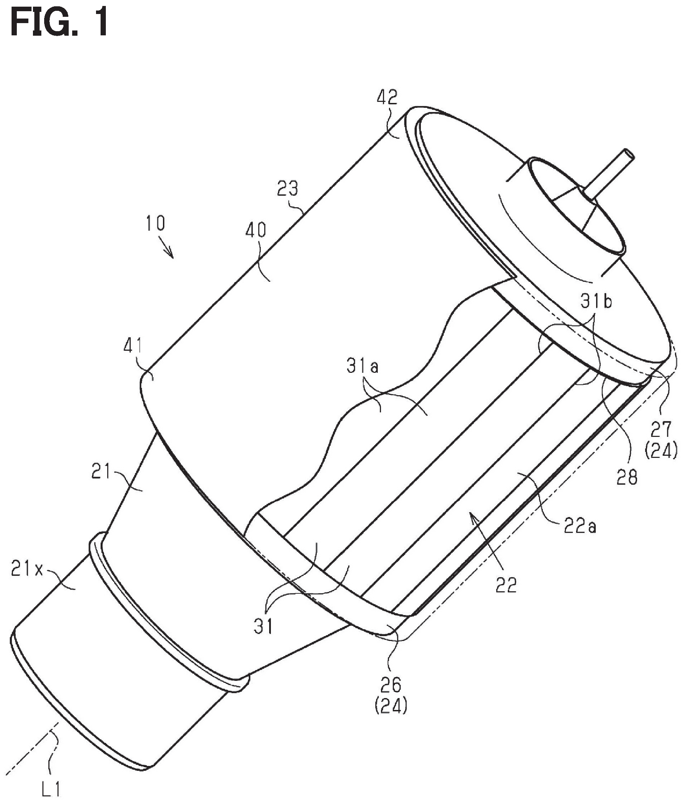

A rotor 10 of the present embodiment shown in FIG. 1 is one of elements constituting a motor. The rotor 10 is rotatably arranged on an inner peripheral side of a stator (not shown) having a substantially annular shape. The stator generates a rotating magnetic field for rotationally driving the rotor 10 based on energization to a coil magnetic pole portion of the stator itself. The rotor 10 of the present embodiment is assumed to be applied to a motor of a high-speed rotation specification with a maximum operating rotation speed of 12000 [rpm] or more as an example. "rpm" is an abbreviation of " revolutions per minute."

### Configuration of Rotor 10

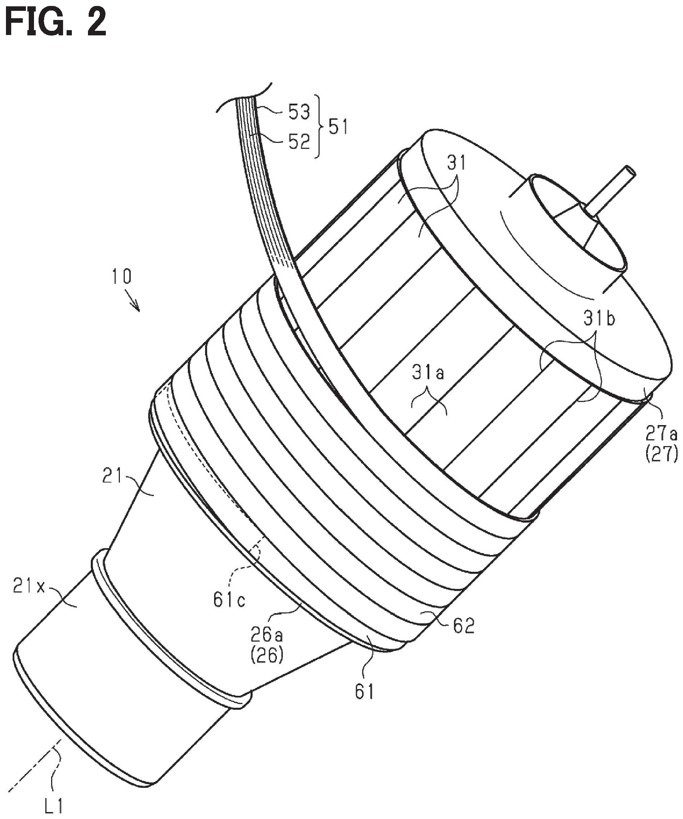

As shown in FIGS. 1 and 2, the rotor 10 of the present embodiment includes a rotor base portion 21, an annular magnet portion 22, and a scattering prevention member 23.

The rotor base portion 21 has a substantially cylindrical shape as a whole. The rotor base portion 21 has, for example, a hollow structure considering weight reduction and the like. One axial end portion of the rotor base portion 21 is integrally configured as an output shaft portion 21x.

### Configuration of Magnet Holding Portion 24

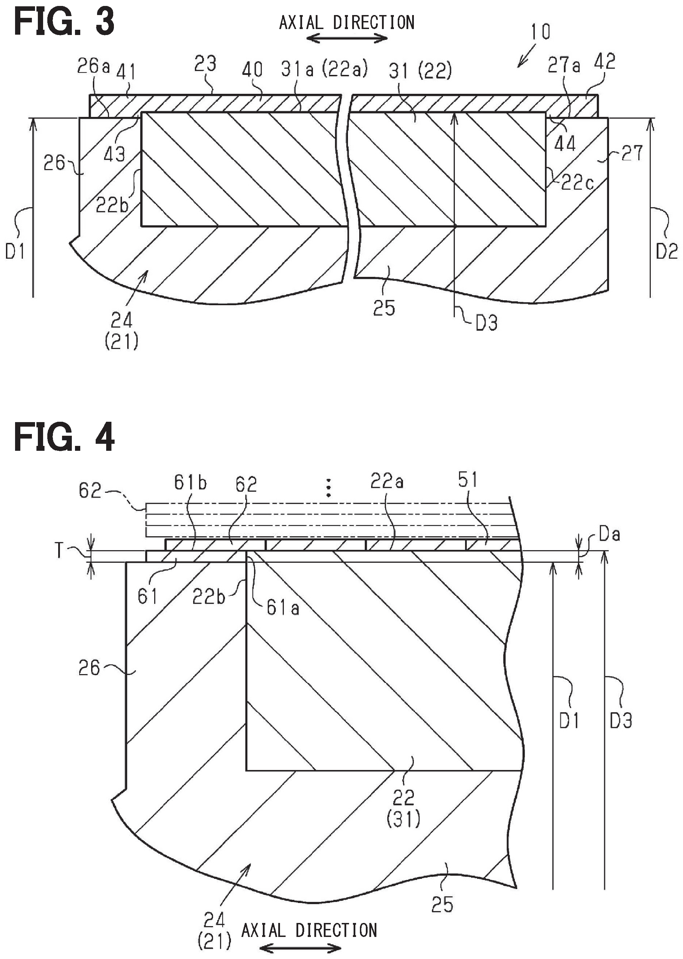

As shown in FIGS. 1 and 3, the rotor base portion 21 has a magnet holding portion 24 on an outer peripheral surface of the rotor base portion 21. The magnet holding portion 24 is disposed over an entire circumference in a circumferential direction on the outer peripheral surface of the rotor base portion 21.

The magnet holding portion 24 includes a base portion 25, a first flange portion 26, and a second flange portion 27. The base portion 25 has, for example, a cylindrical shape centered on an axis L1 of the rotor 10. Each of the first flange portion 26 and the second flange portion 27 extends radially outward from an outer peripheral surface of the base portion 25. Each of the first flange portion 26 and the second flange portion 27 is disposed over an entire circumference of the base portion 25. The magnet holding portion 24 includes a magnet accommodating groove 28 defined by the outer peripheral surface of the base portion 25, the first flange portion 26, and the second flange portion 27. The magnet accommodating groove 28 is defined over the entire circumference in the circumferential direction of the magnet holding portion 24.

The first flange portion 26 has a first flange outer peripheral surface 26a having a circular shape centered on the axis L1 when viewed in the axial direction. An outer radius of the first flange portion 26, i.e., a radius D1 of the first flange outer peripheral surface 26a is uniform over the entire axial length of the first flange portion 26.

The second flange portion 27 has a second flange outer peripheral surface 27a having a circular shape centered on the axis L1 when viewed in the axial direction. An outer radius of the second flange portion 27, i.e., a radius D2 of the second flange outer peripheral surface 27a is uniform over the entire axial length of the second flange portion 27. In the rotor 10 of the present embodiment, the radius D1 of the first flange outer peripheral surface 26a is same as the radius D2 of the second flange outer peripheral surface 27a. Further, for example, axial lengths of the first flange outer peripheral surface 26a and the second flange outer peripheral surface 27a are equal to each other.

### Configuration of Annular Magnet Portion 22

The annular magnet portion 22 is a permanent magnet group including multiple permanent magnets 31 arranged in the circumferential direction to have an annular shape. Each permanent magnet 31 constituting the annular magnet portion 22 has, for example, a substantially quadrangular shape. The annular magnet portion 22 has a cylindrical shape centered on the axis L1. An outer peripheral surface 22a of the annular magnet portion 22 is constituted by a radially outer side surface 31a of each permanent magnet 31. The outer peripheral surface 22a of the annular magnet portion 22 has a circular shape centered on the axis L1 when viewed in the axial direction. An outer radius of the annular magnet portion 22, i.e., a radius D3 of the outer peripheral surface 22a is uniform over the entire axial length of the annular magnet portion 22. The outer peripheral surface 22a of the annular magnet portion 22 is covered by the scattering prevention member 23 over the entire circumference.

The annular magnet portion 22 is disposed in the magnet accommodating groove 28 of the magnet holding portion 24. In other words, the annular magnet portion 22 is disposed between the first flange portion 26 and the second flange portion 27 of the magnet holding portion 24. The first flange portion 26 of the magnet holding portion 24 is in contact with one axial end of each permanent magnet 31 in the axial direction. Further, the second flange portion 27 in the magnet holding portion 24 is in contact with the other axial end of each permanent magnet 31 in the axial direction. Thus, the first flange portion 26 and the second flange portion 27 respectively hold both axial sides of the annular magnet portion 22. Each of the radius D1 of the first flange outer peripheral surface 26a of the first flange portion 26 and the radius D2 of the second flange outer peripheral surface 27a of the second flange portion 27 is set smaller than the radius D3 of the outer peripheral surface 22a of the annular magnet portion 22. An inner side surface of each permanent magnet 31 is in contact with the outer peripheral surface of the base portion 25 of the magnet holding portion 24. Further, side end surfaces 31b on both sides of the permanent magnet 31 in the circumferential direction of the rotor 10 are in contact with the side end surfaces 31b of adjacent permanent magnets 31 (see FIG. 1).

### Configuration of Scattering Prevention Member 23

The scattering prevention member 23 constituting the rotor 10 has a substantially cylindrical shape centered on the axis L1. The scattering prevention member 23 includes a magnet covering portion 40 covering the outer peripheral surface 22a of the annular magnet portion 22, a first flange covering portion 41 covering the first flange outer peripheral surface 26a of the first flange portion 26, and a second flange covering portion 42 covering the second flange outer peripheral surface 27a of the second flange portion 27. The magnet covering portion 40 covers the outer peripheral surface 22a of the annular magnet portion 22 over the entire circumference in the circumferential direction. The first flange covering portion 41 covers the first flange outer peripheral surface 26a of the first flange portion 26 over the entire circumference in the circumferential direction. The second flange covering portion 42 covers the second flange outer peripheral surface 27a of the second flange portion 27 over the entire circumference in the circumferential direction. The first flange covering portion 41 and the second flange covering portion 42 are respectively formed at both axial ends of the scattering prevention member 23.

The first flange covering portion 41 includes a first contact portion 43 in contact with an outer peripheral edge of one axial end 22b of the annular magnet portion 22 in the axial direction. The first contact portion 43 is in contact with the one axial end 22b of the annular magnet portion 22 in the axial direction at a step formed by a difference in outer radius between the annular magnet portion 22 and the first flange portion 26. The second flange covering portion 42 includes a second contact portion 44 in contact with an outer peripheral edge of the other axial end 22c of the annular magnet portion 22 in the axial direction. The second contact portion 44 is in contact with the other axial end 22c of the annular magnet portion 22 in the axial direction at a step formed by a difference in outer radius between the annular magnet portion 22 and the second flange portion 27. The scattering prevention member 23 includes the first contact portion 43 and the second contact portion 44 preventing the scattering prevention member 23 from shifting in the axial direction relative to the annular magnet portion 22.

### Regarding Molding of Scattering Prevention Member 23

As shown in FIG. 2, the scattering prevention member 23 includes a sheet material 51 wound multiple times on the outer peripheral surface 22a of the annular magnet portion 22 of the rotor 10. The sheet material 51 is a sheet-like material in which a fiber bundle 52 is impregnated with a resin base material 53. The sheet material 51 is made of, for example, a carbon fiber reinforced resin material (CFRP material). When the carbon fiber reinforced resin material is used for the sheet material 51, the fiber bundle 52 is made of carbon fibers. The resin base material 53 is made of, for example, a thermosetting resin. In the present embodiment, the sheet material 51 has a volume content of the fiber bundle 52 of, for example, 60 to 70 [%]. After the sheet material 51 is wound multiple times on the outer peripheral surface 22a of the annular magnet portion 22, the sheet material 51 is melted and cured by being heated. Thus, the scattering prevention member 23 is formed. CFRP is an abbreviation of Carbon Fiber Reinforced Plastics.

### Method for Manufacturing Rotor 10

Next, a method for manufacturing the rotor 10 will be described together with the operation of the present embodiment.

First, multiple permanent magnets 31 are arranged in the circumferential direction in the magnet accommodating groove 28 of the magnet holding portion 24 of the rotor base portion 21. Thus, the annular magnet portion 22 constituted by the multiple permanent magnets 31 is formed.

Next, the sheet material 51 is wound over the first flange outer peripheral surface 26a of the first flange portion 26, the outer peripheral surface 22a of the annular magnet portion 22, and the second flange outer peripheral surface 27a of the second flange portion 27. At this time, winding of the sheet material 51 is started from either one of the first flange outer peripheral surface 26a of the first flange portion 26 and the second flange outer peripheral surface 27a of the second flange portion 27. FIGS. 2 and 4 show an example in which winding of the sheet material 51 is started from the first flange outer peripheral surface 26a of the first flange portion 26. Further, when winding the sheet material 51, the sheet material 51 is wound while applying tension in the longitudinal direction of the sheet material 51.

At the start of winding of the sheet material 51, first, a temporary winding portion 61 is wound, for example, one turn on the first flange outer peripheral surface 26a of the first flange portion 26. The temporary winding portion 61 is wound along an imaginary plane perpendicular to the axis L1 of the rotor 10. In other words, the temporary winding portion 61 is wound without being displaced in the axial direction.

The temporary winding portion 61 is wound along the one axial end 22b of the annular magnet portion 22. As shown in FIG. 4, one axial end 61a of the temporary winding portion 61 is in contact with the one axial end 22b of the annular magnet portion 22. A width of the sheet material 51 is less than a length of the first flange outer peripheral surface 26a of the first flange portion 26 in the axial direction. Thus, the temporary winding portion 61 is configured not to protrude from the first flange portion 26 in the axial direction.

In a configuration where the temporary winding portion 61 is wound only one turn, a dimensional difference Da between the radius D1 of the first flange outer peripheral surface 26a of the first flange portion 26 and the radius D3 of the outer peripheral surface 22a of the annular magnet portion 22 may be set equivalent to a thickness T of the sheet material 51. Thus, an outer peripheral surface 61b of the temporary winding portion 61 and the outer peripheral surface 22a of the annular magnet portion 22 become flush, and no step is generated between these outer peripheral surfaces 61b and 22a.

After winding the temporary winding portion 61 one turn, a main winding portion 62 is formed by spirally winding the sheet material 51 while displacing the sheet material 51 in the axial direction. The main winding portion 62 is started to be wound from on an outer peripheral surface of an end portion 61c (see FIG. 2) of the start of winding in the temporary winding portion 61. Thus, the end portion 61c of the start of winding of the temporary winding portion 61 is sandwiched and fixed between the first flange outer peripheral surface 26a of the first flange portion 26 and the main winding portion 62. Thus, it becomes possible to wind the main winding portion 62 while applying an appropriate tension to the sheet material 51.

The main winding portion 62 is wound over the rotor 10 from the outer peripheral surface 61b of the temporary winding portion 61 to the outer peripheral surface 22a of the annular magnet portion 22. As described above, since the outer peripheral surface 61b of the temporary winding portion 61 and the outer peripheral surface 22a of the annular magnet portion 22 are flush, the main winding portion 62 can be wound without bending at a boundary portion between the temporary winding portion 61 and the annular magnet portion 22. Further, the main winding portion 62 is wound, for example, to the second flange outer peripheral surface 27a of the second flange portion 27.

As shown in FIG. 4 the main winding portion 62 wound spirally may be configured such that axial end surfaces of the sheet material 51 adjacent in the axial direction are in contact with each other. Alternatively, a distance may be set between the axial end surfaces. Further, the main winding portion 62 may be configured by only one layer, or may be configured by multiple layers as shown by a two-dot chain line in FIG. 4. In a case where the main winding portion 62 is configured by the multiple layers, the sheet material 51 may be cut for each layer, or all layers may be continuously wound by the one sheet material 51.

After winding the sheet material 51 as described above, a heating step of melting and curing the resin base material 53 by heating the sheet material 51 is performed. Thus, the cylindrical scattering prevention member 23 in which the resin base material 53 is integrally fused and cured is formed on the outer periphery of the annular magnet portion 22. In the heating step, the sheet material 51 may be heated while a state where tension is applied to the sheet material 51 by a jig (not shown) or the like is maintained.

### (Effects of Present Embodiment)

Hereinafter, effects of the present embodiment will be described.
(1) The first flange portion 26 of the rotor 10 is configured as a small-diameter flange portion in which the radius D1 of the first flange outer peripheral surface 26a is set smaller than the radius D3 of the outer peripheral surface 22a of the annular magnet portion 22. According to this configuration, it becomes possible to wind the sheet material 51 while applying an appropriate tension while reducing protrusion radially outward of the first flange covering portion 41 corresponding to the winding start portion by starting winding the sheet material 51 forming the scattering prevention member 23 from the first flange outer peripheral surface 26a of the first flange portion 26, i.e., the small-diameter flange portion. Thus, it becomes possible to reduce the distance between the scattering prevention member 23 and the stator, and as a result, improvement in motor performance can be achieved.
   In the rotor 10 of the present embodiment, the second flange portion 27 is also configured as a small-diameter flange portion in which the radius D2 of the second flange outer peripheral surface 27a is set smaller than the radius D3 of the outer peripheral surface 22a of the annular magnet portion 22. As a result, even in a case in which the sheet material 51 is wound multiple times at a position corresponding to the second flange portion 27 at an end of winding of the sheet material 51, it becomes possible to reduce protrusion radially outward of the second flange covering portion 42 of the scattering prevention member 23.
(2) The first flange covering portion 41 in the scattering prevention member 23 includes the first contact portion 43 in contact with the one axial end 22b of the annular magnet portion 22 in the axial direction. Further, the second flange covering portion 42 in the scattering prevention member 23 includes the second contact portion 44 in contact with the other axial end 22c of the annular magnet portion 22 in the axial direction. Thus, it is possible to reduce displacement of the scattering prevention member 23 in the axial direction relative to the annular magnet portion 22, by the first contact portion 43 and the second contact portion 44 in contact with the both axial ends 22b and 22c of the annular magnet portion 22 in the axial direction, respectively.
(3) At the start of winding of the sheet material 51 forming the scattering prevention member 23, the temporary winding portion 61 is formed by winding the sheet material 51 along the imaginary plane perpendicular to the axis L1 of the rotor 10 on the first flange outer peripheral surface 26a of the first flange portion 26. Thereafter, the main winding portion 62 is formed by spirally winding the sheet material 51 on the outer peripheral surface 22a of the annular magnet portion 22. According to this case, since the temporary winding portion 61 is fixed by being sandwiched between the first flange portion 26 and the main winding portion 62, an appropriate tension can be applied to the sheet material 51. Thereafter, the sheet material 51 is spirally wound on the outer peripheral surface 22a of the annular magnet portion 22. Thus, it becomes possible to exert a large holding force of the scattering prevention member 23 over the entire annular magnet portion 22 in the axial direction.
(4) In winding the sheet material 51, the temporary winding portion 61 is wound to contact the one axial end 22b of the annular magnet portion 22 in the axial direction. According to this case, the temporary winding portion 61 can be wound so that the distance is not generated between the temporary winding portion 61 and the one axial end 22b of the annular magnet portion 22. Thus, the scattering prevention member 23 can be suitably formed.
(5) The temporary winding portion 61 is wound N turns on the first flange outer peripheral surface 26a of the first flange portion 26. When the thickness of the sheet material 51 is referred to as T, the dimensional difference Da between the radius D3 of the outer peripheral surface 22a of the annular magnet portion 22 and the radius D1 of the first flange outer peripheral surface 26a of the first flange portion 26 is set so that Da = T × N. In other words, in the present embodiment, since the temporary winding portion 61 is wound one turn on the first flange outer peripheral surface 26a of the first flange portion 26, the dimensional difference Da with the radius D3 of the outer peripheral surface 22a of the annular magnet portion 22 is set equivalent to the thickness T of the sheet material 51. According to this case, it becomes possible to make the outer peripheral surface 61b of the temporary winding portion 61 and the outer peripheral surface 22a of the annular magnet portion 22 flush. As a result, it becomes possible to wind the main winding portion 62 without bending at the boundary portion between the temporary winding portion 61 and the annular magnet portion 22, by making the outer peripheral surface 61b of the temporary winding portion 61 and the outer peripheral surface 22a of the annular magnet portion 22 flush.
(6) A width of the sheet material 51 is set smaller than a length of the first flange outer peripheral surface 26a of the first flange portion 26 in the axial direction. Thus, the temporary winding portion 61 can be prevented from protruding from the first flange portion 26 in the axial direction.

### (Other Embodiments)

The above embodiment can be modified and implemented as follows. The above embodiment and the following modified examples can be implemented in combination with each other within a range that is not technically contradictory.

The number of windings of the temporary winding portion 61 is not limited to one turn, but may be two or more turns. It may be suitable that the radius D1 of the first flange outer peripheral surface 26a of the first flange portion 26 and the radius D2 of the second flange outer peripheral surface 27a of the second flange portion 27 are appropriately changed according to the number of windings of the temporary winding portion 61.

In the above embodiment, both the first flange portion 26 and the second flange portion 27 are configured as the small-diameter flange portions having the smaller outer radii than that of the annular magnet portion 22, but the present disclosure is not limited to this. For example, only the first flange portion 26 may be configured as the small-diameter flange portion.

In the rotor 10 of the above embodiment, the fiber bundle 52 included in the sheet material 51 can be changed to fibers other than carbon fibers.

Other configurations of the rotor 10 may be changed as appropriate. Further, a shape of the rotor base portion 21 may be changed as appropriate.

In the above embodiment, the present disclosure is applied to a radial type in which the rotor 10 and the stator face each other in the radial direction, but may be applied to an axial type in which the rotor and the stator face each other in the axial direction.

Although the present disclosure has been described based on the examples, it is understood that the present disclosure is not limited to the examples or structures. The present disclosure also includes various modifications and modifications within an equivalent range. In addition, various combinations and forms, and further, other combinations and forms including only one element, more, or less than that, are also within the scope and idea of the present disclosure.

### Aspects of the Present Disclosure

The features of the present disclosure are shown as follows.

### Aspect 1

A rotor (10) includes an annular magnet portion (22), a scattering prevention member (23), and a magnet holding portion (24). The annular magnet portion includes multiple permanent magnets (31) arranged in a circumferential direction to have an annular shape. The scattering prevention member is made of a fiber-reinforced resin material in which a fiber bundle (52) is hardened with a resin base material (53). The scattering prevention member covers an entire circumference of an outer peripheral surface (22a) of the annular magnet portion. The magnet holding portion includes a pair of flange portions (26, 27) extending outward in a radial direction of the annular magnet portion. The pair of flange portions are disposed on both sides of the annular magnet portion in an axial direction of the annular magnet portion. The pair of flange portions hold the both sides of the annular magnet portion. Each of the pair of flange portions includes a flange outer peripheral surface (26a, 27a) having a circular shape when viewed in the axial direction. The outer peripheral surface of the annular magnet portion has a circular shape when viewed in the axial direction. The scattering prevention member includes a magnet covering portion (40) covering the outer peripheral surface of the annular magnet portion and a pair of flange covering portions (41, 42), respectively, covering the flange outer peripheral surfaces of the pair of flange portions. At least one of the pair of flange portions is a small-diameter flange portion (26, 27) that has the flange outer peripheral surface with a radius (D1, D2) smaller than a radius (D3) of the outer peripheral surface of the annular magnet portion.

### Aspect 2

In the rotor according to aspect 1, at least one of the pair of flange covering portions includes a contact portion (43, 44) in contact with an axial end portion (22b, 22c) of the annular magnet portion in the axial direction.

### Aspect 3

In a method for manufacturing a rotor (10), the rotor includes an annular magnet portion (22), a scattering prevention member (23), and a magnet holding portion (24). The annular magnet portion includes multiple permanent magnets (31) arranged in a circumferential direction to have an annular shape. The scattering prevention member is made of a fiber-reinforced resin material in which a fiber bundle (52) is hardened with a resin base material (53). The scattering prevention member covers an entire circumference of an outer peripheral surface (22a) of the annular magnet portion. The magnet holding portion includes a pair of flange portions (26, 27) extending outward in a radial direction of the annular magnet portion. The pair of flange portions are disposed on both sides of the annular magnet portion in an axial direction of the annular magnet portion. The pair of flange portions hold the both sides of the annular magnet portion. Each of the pair of flange portions includes a flange outer peripheral surface (26a, 27a) having a circular shape when viewed in the axial direction. The outer peripheral surface of the annular magnet portion has a circular shape when viewed in the axial direction. At least one of the pair of flange portions is a small-diameter flange portion (26, 27) that has the flange outer peripheral surface with a radius (D1, D2) smaller than a radius (D3) of the outer peripheral surface of the annular magnet portion. The method includes forming a temporary winding portion (61) and forming a main winding portion (62). The forming the temporary winding portion is performed by winding a sheet material (51) of the scattering prevention member along an imaginary plane perpendicular to an axis (L1) of the rotor on a flange outer peripheral surface of the small-diameter flange portion at a winding start portion of the sheet material. After the forming of the temporary winding portion, the forming the main winding portion is performed by spirally winding the sheet material on the outer peripheral surface of the annular magnet portion.

### Aspect 4

In the method according to aspect 3, the forming of the temporary winding portion includes winding the temporary winding portion to be in contact with an axial end portion (22b, 22c) of the annular magnet portion in the axial direction.

### Aspect 5

In the method according to aspect 3 or 4, the forming of the temporary winding portion includes winding the temporary winding portion N turns on the flange outer peripheral surface of the small-diameter flange portion. A thickness T of the sheet material and a difference Da between the radius of the flange outer peripheral surface of the small-diameter flange portion and the radius of the outer peripheral surface of the annular magnet portion satisfy: Da = T × N.

## Claims

1. A rotor (10) comprising:
an annular magnet portion (22) including multiple permanent magnets (31) arranged in a circumferential direction to have an annular shape;
a scattering prevention member (23) made of a fiber-reinforced resin material in which a fiber bundle (52) is hardened with a resin base material (53), the scattering prevention member covering an entire circumference of an outer peripheral surface (22a) of the annular magnet portion; and
a magnet holding portion (24) including a pair of flange portions (26, 27) extending outward in a radial direction of the annular magnet portion, the pair of flange portions disposed on both sides of the annular magnet portion in an axial direction of the annular magnet portion, the pair of flange portions holding the both sides of the annular magnet portion, wherein
each of the pair of flange portions includes a flange outer peripheral surface (26a, 27a) having a circular shape when viewed in the axial direction,
the outer peripheral surface of the annular magnet portion has a circular shape when viewed in the axial direction,
the scattering prevention member includes a magnet covering portion (40) covering the outer peripheral surface of the annular magnet portion, and a pair of flange covering portions (41, 42), respectively, covering the flange outer peripheral surfaces of the pair of flange portions, and
at least one of the pair of flange portions is a small-diameter flange portion (26, 27) that has the flange outer peripheral surface with a radius (D1, D2) smaller than a radius (D3) of the outer peripheral surface of the annular magnet portion.

2. The rotor according to claim 1, wherein
at least one of the pair of flange covering portions includes a contact portion (43, 44) in contact with an axial end portion (22b, 22c) of the annular magnet portion in the axial direction.

3. A method for manufacturing a rotor (10),the rotor including:
an annular magnet portion (22) including multiple permanent magnets (31) arranged in a circumferential direction to have an annular shape;
a scattering prevention member (23) made of a fiber-reinforced resin material in which a fiber bundle (52) is hardened with a resin base material (53), the scattering prevention member covering an entire circumference of an outer peripheral surface (22a) of the annular magnet portion;
a magnet holding portion (24) including a pair of flange portions (26, 27) extending outward in a radial direction of the annular magnet portion, the pair of flange portions disposed on both sides of the annular magnet portion in an axial direction of the annular magnet portion, the pair of flange portions holding the both sides of the annular magnet portion;
each of the pair of flange portions including a flange outer peripheral surface (26a, 27a) having a circular shape when viewed in the axial direction;
the outer peripheral surface of the annular magnet portion having a circular shape when viewed in the axial direction; and
at least one of the pair of flange portions being a small-diameter flange portion (26, 27) that has the flange outer peripheral surface with a radius (D1, D2) smaller than a radius (D3) of the outer peripheral surface of the annular magnet portion,
the method comprising:
forming a temporary winding portion (61) by winding a sheet material (51) of the scattering prevention member along an imaginary plane perpendicular to an axis (L1) of the rotor on the flange outer peripheral surface of the small-diameter flange portion at a winding start portion of the sheet material; and
after the forming of the temporary winding portion, forming a main winding portion (62) by spirally winding the sheet material on the outer peripheral surface of the annular magnet portion.

4. The method according to claim 3, wherein
the forming of the temporary winding portion includes winding the temporary winding portion to be in contact with an axial end portion (22b, 22c) of the annular magnet portion in the axial direction.

5. The method according to claim 3, wherein
the forming of the temporary winding portion includes winding the temporary winding portion N turns on the flange outer peripheral surface of the small-diameter flange portion, and
a thickness T of the sheet material and a difference Da between the radius of the flange outer peripheral surface of the small-diameter flange portion and the radius of the outer peripheral surface of the annular magnet portion satisfy: Da = T × N.
